(19) Europäisches Patentamt
European Patent Office
Office européen des brevets

(11) **EP 4 050 253 A1**

(12) **EUROPÄISCHE PATENTANMELDUNG**

(43) Veröffentlichungstag:
**31.08.2022 Patentblatt 2022/35**

(21) Anmeldenummer: **22152142.0**

(22) Anmeldetag: **19.01.2022**

(51) Internationale Patentklassifikation (IPC):
**F21V 8/00** (2006.01)   **G02B 6/04** (2006.01)

(52) Gemeinsame Patentklassifikation (CPC):
**G02B 6/001; G02B 6/04;** B60Q 3/64; B60Q 3/78

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **24.02.2021 DE 102021104380**

(71) Anmelder: **Lisa Dräxlmaier GmbH
84137 Vilsbiburg (DE)**

(72) Erfinder: **Bayersdorfer, Bernhard
84171 Baierbach (DE)**

(54) **PASPOL-LICHTLEITER UND VERFAHREN ZUR HERSTELLUNG EINES PASPOLLICHTLEITERS**

(57)   Die vorliegende Erfindung betrifft ein Verfahren zur Herstellung eines Paspol-Lichtleiters sowie einen nach diesem Verfahren hergestellten Paspol-Lichtleiter.

Das Verfahren zur Herstellung eines Paspol-Lichtleiters (1) umfasst die Schritte, dass ein Lichtleiterbündel (3), bestehend aus nebeneinander angeordneten Lichtleitern (2), bereitgestellt wird, dass ein zumindest teilweise lichtdurchlässiges Gewebe (10) entlang zumindest eines Teilabschnitts des Lichtleiterbündels (3) angeordnet wird, dass das Lichtleiterbündel (3) mittels des Gewebes (10) ummantelt wird, so dass das Gewebe (10) eine Gewebehülle (13) ausbildet, wobei die Gewebehülle (13), im Querschnitt gesehen, eine von dem Lichtleiterbündel (3) abstehende Fahne (15) ausbildet, zwecks Befestigung des Paspol-Lichtleiters (1), und dass die Gewebehülle (13) entlang ihrer Längsseite verschlossen wird.

Das erfindungsgemäße Verfahren zur Herstellung eines Paspol-Lichtleiters stellt unter Einsatz konstruktiv möglichst einfacher Mittel einen Paspol-Lichtleiter zur Verfügung, der ein optimales Erscheinungsbild bei breitem Einsatzspektrum und eine effiziente Montage gewährleistet.

Fig. 1

EP 4 050 253 A1

## Beschreibung

### Technisches Gebiet

Die vorliegende Erfindung betrifft ein Verfahren zur Herstellung eines Paspol-Lichtleiters sowie einen nach diesem Verfahren hergestellten Paspol-Lichtleiter.

Der Paspol-Lichtleiter kann auch als "Paspel-Lichtleiter" oder "Keder-Lichtleiter" bezeichnet werden und ist durch seinen im Wesentlichen runden Querschnitt und seine flache Fahne zum Zweck der Befestigung charakterisiert.

### Stand der Technik

Es ist bereits bekannt, die Beleuchtung von Konturen im Innenraum für ein Kraftfahrzeug, insbesondere einen Kraftfahrzeugsitz, eine Instrumententafel oder eine Fahrzeugtürinnenverkleidung, mit Lichtleitern zu versehen, an denen Lichteffekte erzeugt werden sollen.

In der EP 0988179 B1 ist eine Lichtintegration eines Lichtleiters in ein Innenraumausstattungsteil beschrieben. Offenbart ist ein Inneneinrichtungsgegenstand, bei dem ein zumindest über einen Teil seiner Länge sichtbares Licht emittierender Lichtwellenleiter in einer Befestigungseinrichtung befestigt ist. An zumindest einem Ende des Lichtwellenleiters ist eine Lichteinspeiseinrichtung zum Einbringen von Licht in den Lichtwellenleiter vorgesehen und der Lichtwellenleiter befindet sich in einem ein lichtdurchlässiges Hohlteil bildenden Materialstreifen der Befestigungseinrichtung. Die Befestigungseinrichtung weist, im Querschnitt gesehen, ein sich von dem Hohlteil weg erstreckendes und als Befestigungsfahne dienendes Streifenteil auf. Mit dieser Befestigungsfahne ist der im Hohlteil gehaltene Lichtwellenleiter am Inneneinrichtungsgegenstand angebracht.

Bei derartigen, sich heutzutage im Einsatz befindlichen lichtdurchlässigen bzw. zumindest teilweise lichtdurchlässigen Hohlteilen ist bekannt, dass diese als Kunststoffhüllen ausgebildet sind und eine verbesserte Integration von Lichtleitern in Innenraumausstattungsteilen gewährleisten. Die Kunststoffhüllen weisen dabei eine besonders leichte Fertigung auf, weswegen sie hier standardmäßig Einsatz finden.

Insbesondere im automobil Luxussegment äußert sich der Einsatz von Kunststoffhüllen zur Integration von Lichtleitern aber in der Regel in einer qualitativ niedrigen optischen Ästhetik. Zudem erhält ein durch eine zumindest teilweise lichtdurchlässige Kunststoffhülle tretendes Licht aufgrund des Kunststoffs eine künstliche Wirkung, was das insgesamte Raumgefühl deutlich unnatürlicher wirken lässt.

Bei der Anordnung von bekannten Lichtleitern entlang von Konturen im Innenraum eines Kraftfahrzeugs ist zudem bekannt, dass es bei kleinen Biegeradien in der Kontur zu einer inhomogenen Auskopplung von Licht aus dem Lichtleiter kommen kann.

Dies ist dadurch begründet, dass das im Lichtleiter geführte Licht im Bereich der Biegung des Lichtleiters in einem zu steilen Einfallswinkel auf die Umfangsseite des Lichtleiters trifft, wodurch an dieser Stelle ein größerer Anteil an Licht ausgekoppelt wird, als es an weniger gebogenen Stellen des Lichtleiters der Fall ist. Derartige Stellen leuchten somit heller als der Rest des Lichtleiters. Dies führt zu einem ungewollt inhomogenen Design.

Um diese Inhomogenität zu vermeiden werden die Lichtleiter mit einem kleineren Durchmesser ausgestaltet, so dass der Einfallswinkel des Lichts im Lichtleiter an einer Biegung kleiner wird.

Die Möglichkeiten im Design eines Innenraums eines Kraftfahrzeug mit einem bekannten Lichtleiter ist damit jedoch auf Lichtleiter mit kleinem Durchmesser eingeschränkt.

Des Weiteren ist bekannt, mehrere Lichtleiter einzusetzen, welche bei der Integration im Innenraum eines Kraftfahrzeugs dann nebeneinander angeordnet werden. Der Einsatz mehrerer Lichtleiter kann z.B. anstelle des Einsatzes eines einzelnen Lichtleiters mit größerem Durchmesser als die mehreren Lichtleiter genutzt werden, um die vorangegangenen erwähnten Schwierigkeiten in der homogenen Darstellung eines Lichtleiters im Bereich einer Biegung zu kompensieren.

Problematisch beim Einsatz mehrere Lichtleiter ist jedoch, eine Homogenität im gemeinsamen Lichtbild der mehreren Lichtleiter zu gewährleisten, da deren Anordnung und Fixierung zueinander und am jeweiligen Bauteil im Innenraum eines Kraftfahrzeugs konstruktiv und fertigungstechnisch aufwendig ist.

### Beschreibung der Erfindung

Eine Aufgabe der Erfindung ist es daher, ein Verfahren zur Herstellung eines Paspol-Lichtleiters zur Verfügung zu stellen, mit welchem unter Einsatz konstruktiv möglichst einfacher Mittel ein Paspol-Lichtleiter mit optimalem Erscheinungsbild und breitem Einsatzspektrum bei effizienter Montage herstellbar ist.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein erfindungsgemäßes Verfahren zur Herstellung eines Paspol-Lichtleiters umfasst die Schritte, dass ein Lichtleiterbündel, bestehend aus nebeneinander angeordneten Lichtleitern, bereitgestellt wird, dass ein zumindest teilweise lichtdurchlässiges Gewebe entlang zumindest eines Teilabschnitts des Lichtleiterbündels angeordnet wird, dass das Lichtleiterbündel mittels des Gewebes ummantelt wird, so dass das Gewebe eine Gewebehülle ausbildet, wobei die Gewebehülle, im Querschnitt gesehen, eine von dem Lichtleiterbündel abstehende Fahne zur Befestigung des Paspol-Lichtleiters ausbildet, und dass die Gewebehülle entlang ihrer Längsseite verschlossen wird.

Bei der Anordnung der Lichtleiter nebeneinander zur Ausbildung des Lichtleiterbündels ist insbesondere vorgesehen, dass die Haupterstreckungsrichtungen der Lichtleiter dabei im Wesentlichen parallel zueinander verlaufen können.

Insbesondere ist vorgesehen, dass die Gewebehülle aus einem Stoff ausgebildet sein kann, also eine Stoffhülle ist. Die Stoffhülle weist eine qualitativ hochwertige Wirkung im Innenraum eines Kraftfahrzeugs auf.

Weiterhin hat von einem jeweiligen Lichtleiter ausgegebenes und durch die zumindest teilweise lichtdurchlässige Stoffhülle tretendes Licht eine besonders natürliche Wirkung, insbesondere im Vergleich zu bekannten Kunststoffschläuchen.

Zudem ist es durch eine Variation der Webdichte des Gewebes selbst möglich, der Gewebehülle eine Vielzahl an unterschiedlichen Lichtwirkungen zu verleihen. So kann das Gewebe zum Beispiel derart ausgestaltet sein, dass nur ein geringer Anteil an von einem Lichtleiter ausgegebenem Licht durch ihn hindurchtreten kann, dafür aber eine besonders grobe Webung im Gewebe ausgebildet ist, wodurch auch durch die Zwischenräume im Gewebe Licht hindurchscheinen kann. Dieser Effekt kann durch eine farbige Gewebehülle noch weiter hervorgehoben werden.

Mittels dem Lichtleiterbündel aus mehreren Lichtleitern kann ein gemäß dem erfindungsgemäßen Verfahren hergestellter Paspol-Lichtleiter entlang einer Kontur im Innenraum eines Kraftfahrzeugs auch an besonders kleinen Biegeradien angeordnet werden und eine homogene Auskopplung von Licht aus den Lichtleitern gewährleisten. Dadurch, dass ein einzelner Lichtleiter für sich einen kleineren Durchmesser als das gesamte Lichtleiterbündel aufweist, ist der Einfallswinkel des Lichts auf die umfangsseitige Kontur eines einzelnen Lichtleiters ausreichend klein gehalten, so dass kein unerwünschtes Auskoppeln an Licht stattfindet. Die Möglichkeiten im Design eines Innenraums eines Kraftfahrzeug mit einem erfindungsgemäßen Lichtleiter sind damit sehr umfangreich.

Die Fahne der Gewebehülle dient insbesondere dazu, den Paspol-Lichtleiter z.B. an einem Bauteil im Innenraum eines Kraftfahrzeugs zu befestigen, so dass der Paspol-Lichtleiter an seiner Position an diesem Bauteil über die Fahne gehalten werden kann. Dies ermöglicht eine einfache und zuverlässige Montage des Paspol-Lichtleiters insbesondere an Konturen, an welchen mehrere Bauteile bzw. Dekorteile aufeinander treffen bzw. aneinander anschließen.

Dabei kann vorgesehen sein, dass die Fahne im Wesentlichen radial vom Lichtleiterbündel abstehen kann, damit eine optimale Erreichbarkeit der Fahne zwecks Befestigung gegeben ist. Besonders bevorzugt kann die Ausrichtung der Fahne zum Lichtleiterbündel auch variierbar sein, so dass die Befestigung noch weiter vereinfacht wird.

Die Fahne weißt dabei eine Breite, eine Länge und eine Höhe auf. Die Breite der Fahne definiert dabei die Erstreckung der Fahne, im Querschnitt gesehen, vom Lichtleiterbündel weg entlang der Kontur der Fahne. Die Länge der Fahne definiert die Erstreckung der Fahne entlang der Längsseite des Lichtleiterbündels. Die Höhe der Fahne definiert die Erstreckung der Fahne, im Querschnitt gesehen, quer zur Erstreckung der Breite der Fahne. Am Beispiel eines Blatt Papiers verdeutlicht, ist die Höhe der Fahne äquivalent der Papierstärke bzw. Papierdicke des Blatt Papiers. Die Höhe kann entsprechend auch als die Dicke oder die Stärke der Fahne bezeichnet werden.

Das Verschließen der Gewebehülle bedeutet, dass die Lichtleiter in Querrichtung nicht aus dem Innenraum der Gewebehülle herausbewegt werden können, also in dieser in Querrichtung gehalten sind.

Durch eine Befestigung der Fahne an einem Bauteil im Innenraum eines Kraftfahrzeugs können die in der verschlossenen Gewebehülle gehaltenen Lichtleiter somit zum Bauteil fixiert werden.

Insbesondere kann vorgesehen sein, dass die Gewebehülle durch Ultraschallverschweißen verschlossen wird.

Vorzugsweise handelt es sich bei den Lichtleitern um ein, auf Spulen aufgewickeltes Strangmaterial, welches im beschriebenen erfindungsgemäßen Verfahren von derartigen Spulen in definierter Länge abgewickelt wird.

Auch bei dem Gewebe kann es sich um ein auf einer Spule aufgewickeltes Gewebeband handeln, welches im beschriebenen erfindungsgemäßen Verfahren in definierter Länge abgewickelt wird. Insbesondere ist dabei vorzusehen, dass die abgewickelte Länge des Gewebebands im Wesentlichen der abgewickelten Länge der Lichtleiter entspricht, damit eine möglichst spannungsfreie und homogene Ummantelung gewährleistet ist.

Eine Ausführung des Verfahrens kann vorsehen, dass das nebeneinander Anordnen der Lichtleiter derart realisiert wird, dass die Lichtleiter durch eine gemeinsame Leiterführungseinrichtung geführt werden.

Das bedeutet, dass die Lichtleiter in Abhängigkeit der geometrischen Ausgestaltung der Leiterführungseinrichtung nach dem Durchtritt/Austritt/Abgehen von der Leiterführungseinrichtung nah beieinander geführt werden. Die Leiterführungseinrichtung kann dabei vorzugsweise als eine Öse ausgestaltet sein, also ein im Wesentlichen kreisrunder Ring sein, durch welchen jeder der Lichtleiter hindurchgeführt wird.

Nach dem Austritt der Lichtleiter aus der Leiterführungseinrichtung wird eine räumlich nah benachbarte Anordnung der Lichtleiter erzwungen, so dass diese ab dem Austritt aus der Leiterführungseinrichtung das Lichtleiterbündel ausbilden.

Eine weitere Ausführung des Verfahrens kann vorsehen, dass das Ummanteln des Lichtleiterbündels mittels des Gewebes durch eine Hüllenführungseinrichtung realisiert wird. Dazu weist die Hüllenführungseinrichtung eine Bündel-Führung zur Führung des Lichtleiterbündels und eine Gewebe-Führung zur Führung des Gewebes auf, wobei das Gewebe das Lichtleiterbündel nach dem Durchlaufen der Hüllenführungseinrichtung zumindest bereichsweise ummantelt.

Die Gewebe-Führung realisiert dabei ein Zusammenlegen bzw. ein Zusammenfalten des durch sie hindurchgeführten Gewebes, wobei ein aus der Bündel-Führung austretendes Lichtleiterbündel derart relativ zum Gewebe geführt wird, dass das Zusammenlegen bzw. das Zusammenfalten um das Lichtleiterbündel herum stattfindet und so das Ummanteln des Lichtleiterbündels durch das Gewebe realisiert wird.

Die Bündel-Führung kann dabei als eine Öse, also ein im Wesentlichen kreisrunder Ring ausgestaltet sein, durch welchen das Lichtleiterbündel hindurchgeführt wird. Alternativ ist zum Beispiel auch eine im Querschnitt im Wesentlichen V-förmige oder L-förmige Auflage denkbar, in welcher das Lichtleiterbündel liegt.

Die Gewebe-Führung umfasst dabei insbesondere eine Kontur, welche an einer Eingangsseite der Hüllenführungseinrichtung, an welcher Gewebe und Lichtleiterbündel eingeführt werden, eine im Wesentlichen lineare bzw. flache Querschnittskontur. Dadurch kann das Gewebe möglichst einfach eingeführt werden. An der Ausgangsseite der Hüllenführungseinrichtung, an welcher Gewebe und Lichtleiterbündel ausgeführt werden, umfasst die Gewebe-Führung zumindest bereichsweise eine im Wesentlichen L-förmige oder U-förmige oder nahezu O-förmige oder O-förmige Querschnittskontur. Somit kann mit dem Hindurchführen des Gewebes durch die Gewebe-Führung der Hüllenführungseinrichtung das Ummanteln des Gewebes zumindest teilweise realisiert werden.

In einer Ausgestaltungsform der Erfindung kann die Hüllenführungseinrichtung und die Leiterführungseinrichtung Bestandteil einer gemeinsamen Führungseinheit sein.

Das bedeutet insbesondere, dass das Zusammenführen der Lichtleiter und das Ummanteln der Lichtleiter mit dem Gewebe in unmittelbar aufeinanderfolgenden oder gegebenenfalls sogar gleichzeitig durchgeführten Verfahrensschritten realisiert werden.

Gemäß einer weiteren Ausführungsform umfasst die abstehenden Fahne der Gewebehülle im Wesentlichen beide der querseitigen Endbereiche des Gewebes, wobei die Gewebehülle im Bereich der Fahne verschlossen wird.

Das Verschließen der Fahne kann dabei nur in einem Teilbereich und/oder nur punktuell entlang der Länge der Fahne vorgesehen sein. Bevorzugt kann ein im Wesentlichen durchgängiger Verschluss der Fahne entlang deren gesamter Länge vorgesehen sein.

Das Verschließen der Fahne kann zudem nur in einem Teilbereich und/oder nur punktuell entlang der Breite der Fahne vorgesehen sein. Auch hier kann ein im Wesentlichen durchgängiger Verschluss der Fahne entlang der gesamten Breite bevorzugt sein.

Unter einem querseitigen Endbereich ist dabei der Bereich des Gewebes zu verstehen, der nicht zu dem die Kontur des Innenraums der Gewebehülle definierenden Bereich des Gewebes gehört. Der querseitige Endbereich des Gewebes ist also, im Querschnitt gesehen, jeweils der Bereich des Gewebes, der endseitig nach dem Ummanteln des Lichtleiterbündels mittels des Gewebes übersteht.

Der Verschluss der Gewebehülle im Bereich der Fahne ermöglicht es, dass die Gewebehülle unabhängig der Ausgestaltung des Lichtleiterbündels erfolgt. Da die Fahne vom Lichtleiterbündel absteht, sich also vom Lichtleiterbündel weg erstreckt, hat es auf das Verschließen der Fahne keinen Einfluss, wie viele Lichtleiter und abhängig von deren Durchmesser sich in der Gewebehülle befinden.

Insbesondere kann vorgesehen sein, dass die Gewebehülle durch Ultraschallschweißen im Bereich der Fahne verschlossen wird.

Alternativ zum Ultraschallverschweißen sind auch andere Methoden zum Verschließen denkbar, wie z.B. Nähen oder Kleben.

In einer alternativen Ausführungsform ist auch denkbar, dass die Fahne der Gewebehülle im Wesentlichen lediglich einen der beiden querseitigen Endbereiche des Gewebes umfasst. Es werden hier also nicht die beiden querseitigen Endbereiche des Gewebes flächig aufeinander gelegt und verschlossen, sondern es wird das querseitig äußerste Ende eines ersten der beiden Endbereiche mit einem querseitig innersten Ende eines zweiten querseitigen Endbereichs verbunden. Im Querschnitt gesehen wird lediglich ein im Wesentlichen punktueller Kontakt der beiden querseitigen Endbereiche zueinander ausgebildet.

Vorteilhaft hieran ist, dass die Höhe der Fahne nur halb so groß ist wie die Höhe der Fahne bei einer Ausführung mit beiden querseitigen Endbereichen. Diese halbierte Höhe bzw. Dicke der Fahne ermöglicht es, die Befestigung des Paspol-Lichtleiters an einem Bauteil in einem Kraftfahrzeug zu erleichtern und/oder zu vereinfachen.

In einer Ausführung kann das erfindungsgemäße Verfahren einen Weiteren, an das Verschließen der Gewebehülle anschließenden Verfahrensschritt umfassen, in welchem ein Abtrennen des Paspol-Lichtleiters realisiert wird, so dass ein Paspol-Lichtleiter mit definierter Länge herstellbar ist.

Ein derartiges Abtrennen des Paspol-Lichtleiters kann zudem den Zweck erfüllen, ein bündiges Ende der Lichtleiter zu gewährleisten, was ein Einspeisen von Licht in die Lichtleiter konstruktiv einfacher gestaltet.

Alternativ dazu kann aber auch vorgesehen sein, dass ein z.B. durch Abtrennen erzeugtes Ende eines Paspol-Lichtleiters in einem zusätzlichen Verfahrensschritt vorsieht, dass eine Bündigkeit zumindest der mehreren Lichtleiter-Enden zueinander hergestellt wird.

Gemäß einer Ausgestaltung kann das erfindungsgemäße Verfahren in einem weiteren Verfahrensschritt vorsehen, dass ein Abschlusselement zum Verbinden des Paspol-Lichtleiters mit einer Lichtquelle mit einem längsseitigen Ende des Paspol-Lichtleiters verbunden wird.

Das Abschlusselement kann im Wesentlichen zylinderförmig ausgeführt sein, so dass der Paspol-Lichtleiter abschnittsweise mit seinem längsseitigen Ende im Abschlusselement angeordnet ist. Das Abschlusselement ist somit wie eine Hülse über das längsseitige Ende des Paspol-Lichtleiters gesteckt. Dabei kann eine Verbindung zwischen dem längsseitigen Ende des Paspol-Lichtleiters und dem Abschlusselement insbesondere derart realisiert sein, dass das Abschlusselement zusammengedrückt und plastisch verformt wird, wodurch im Wesentlichen eine Pressverbindung zum Paspol-Lichtleiter entsteht.

Es ist aber auch denkbar, dass eine z.B. formschlüssige, kraftschlüssige und/oder stoffschlüssige Verbindung zwischen dem Ende des Paspol-Lichtleiters und dem Abschlusselement realisiert wird.

Ein derartiges Abschlusselement ist vorzugsweise an beiden Enden des Paspol-Lichtleiters vorgesehen.

In einer weiteren Ausführungsform kann das erfindungsgemäße Verfahren zudem einen Verfahrensschritt umfassen, bei welchem wenigstens einer der Lichtleiter des Paspol-Lichtleiters mittels einer Prägeeinheit vor dem nebeneinander Anordnen der Lichtleiter geprägt wird, zur Aufrauung des wenigstens einen Lichtleiters an wenigstens einem Teilbereich der Oberfläche dieses Lichtleiters.

Die Aufrauung bzw. Prägung der Oberfläche erlaubt ein Auskoppeln eines Teils des durch den jeweiligen Lichtleiter geführten Lichts, so dass dieses aus dem Lichtleiter austreten kann.

Durch die Auswahl der Rauheit der Prägung kann bestimmt werden, über welche Länge des Lichtleiters aus diesem ein homogenes Auskoppeln von Licht realisiert wird und mit welcher Stärke das Licht dabei in definierte Bereiche entlang des Lichtleiters austritt.

Dabei kann auch vorgesehen sein, dass mehrere Lichtleiter mit der Prägeeinheit geprägt werden. Damit ist natürlich nicht ausgeschlossen, dass auch unterschiedliche Prägeeinheiten für unterschiedliche Lichtleiter eingesetzt werden können.

Eine Prägeeinheit umfasst dabei in der Regel zwei achsparallel zueinander angeordnete Prägerollen, wobei ein entsprechend zu prägender Lichtleiter zwischen deren radialen Außenseite durch diese hindurchgeführt wird. Die beiden Rollen sorgen somit für eine Prägung des Lichtleiters auf sich gegenüberliegenden Winkeln in Bezug auf den Umfang des Lichtleiters.

Vorteilhaft bei dieser Ausführung der Prägeeinheit ist, dass die Prägung durch die rein mechanische Prägung einfach umzusetzen ist, da nur unter Druck die raue Oberfläche der Rollen auf die Lichtleiter abgeprägt wird.

Insbesondere kann ein Lichtleiter dabei durch mehrere derartige Prägeeinheiten hintereinander geführt werden, wobei die Prägeeinheiten derart unterschiedlich ausgeführt sind, dass jede in einem anderen Winkel in Bezug auf den Umfang des Lichtleiters eine Prägung realisiert. Besonders bevorzugt können drei derartige, in Reihe angeordnete Prägeeinheiten vorgesehen sein, wobei ein erste Prägeeinheit in einem Winkel von 0° und 180° prägt, eine zweite Prägeeinheit in einem Winkel von 60° und 240° prägt und eine dritte Prägeeinheit in einem Winkel von 120° und 300° prägt.

Dadurch kann eine möglichst gleichmäßige Prägung an im Wesentlichen der gesamten Oberfläche des jeweiligen Lichtleiters realisiert werden.

In einer weiteren Ausführung der Erfindung können wenigstens zwei Lichtleiter zur Ausbildung des Lichtleiterbündels nebeneinander angeordnet und miteinander verbunden werden.

Das bedeutet, dass die Oberflächen der Lichtleiter zumindest mittelbar miteinander verbunden sind, insbesondere aneinander anliegen.

Miteinander verbunden kann dabei z.B. ein miteinander verflochten meinen.

Bei einer Ausbildung des Lichtleiterbündels aus genau zwei Lichtleitern, kann verflechten ein ineinander verdrehen sein.

Ein Vorteil dieser Verflechtung ist insbesondere dann gegeben, wenn mehrere Lichtleiter mit unterschiedlich farbigem Licht durchleuchtet werden. Die Verflechtung sorgt dabei dafür, dass eine gewisse Regelmäßigkeit im Farbbild erreichbar ist.

Des Weiteren umfasst die Erfindung einen Paspol-Lichtleiter, hergestellt nach einem erfindungsgemäßen Verfahren. Der Paspol-Lichtleiter umfasst mehrere nebeneinander angeordnete Lichtleiter, so dass diese ein Lichtleiterbündel ausbilden, welches von einem zumindest teilweise lichtdurchlässigen Gewebe in Form einer Gewebehülle ummantelt ist. Zudem ist die Gewebehülle entlang ihrer Längsseite verschlossen.

Gemäß einer Ausführungsform des Paspol-Lichtleiters kann wenigstens einer der Lichtleiter des Lichtleiterbündels einen andere Querschnitt aufweisen, als die anderen Lichtleiter des Lichtleiterbündels.

Unter einem anderen Querschnitt ist vorzugsweise eine anders große Querschnittsfläche zu verstehen, wobei nicht ausgeschlossen ist, dass ein anderer Querschnitt alternativ oder ergänzend auch eine andere Form des Querschnitts meinen kann.

Der Einsatz von Lichtleitern mit unterschiedlichen Querschnitten ermöglicht es zum Beispiel, dass Zwischenräume zwischen gleich großen Lichtleitern mit kleineren Lichtleitern aufgefüllt werden, so dass die Packungsdichte an Lichtleitern in der Gewebehülle vorteilhaft hoch ist.

Außerdem kann beim erfindungsgemäßen Paspol-Lichtleiter vorgesehen sein, dass eine Querschnittsfläche eines Innenraums der Gewebehülle eine Größe A aufweist und eine aufsummierte Querschnittsfläche aller Lichtleiter eine gemeinsame Größe B auf-

weist, wobei gilt:

$$B \cdot A = 0{,}5 \ldots 1{,}0$$

Das genaue Verhältnis ist bei Lichtleitern mit gleichem Durchmesser lediglich von der Anzahl der Lichtleiter abhängig.

Generell ist vorteilhaft, wenn die Lichtleiter einen möglichst hohen Anteil der Querschnittsfläche der Gewebehülle ausfüllen, damit das gesamte Bauteil des Paspol-Lichtleiters einen möglichst geringe Bauraumanforderungen hat und/oder sichergestellt ist, dass die Lichtleiter sich in der Gewebehülle nicht zu viel bewegen können zwecks Gewährung einer möglichst optimierten Homogenität in der Lichtabgabe des Paspol-Lichtleiters.

**Kurze Figurenbeschreibung**

Nachfolgend wird ein vorteilhaftes Ausführungsbeispiel der Erfindung unter Bezugnahme auf die begleitenden Figuren erläutert. Es zeigen:

Figur 1     eine schematische Darstellung eines erfindungsgemäßen Verfahrens,

Figur 2     eine detailliertere Darstellung des erfindungsgemäßen Verfahrens und

Figur 3     eine Querschnittsdarstellung eines Erzeugnisses eines erfindungsgemäßen Verfahrens.

Die Figuren sind lediglich schematische Darstellungen und dienen nur der Erläuterung der Erfindung. Gleiche oder gleichwirkende Elemente sind durchgängig mit den gleichen Bezugszeichen versehen.

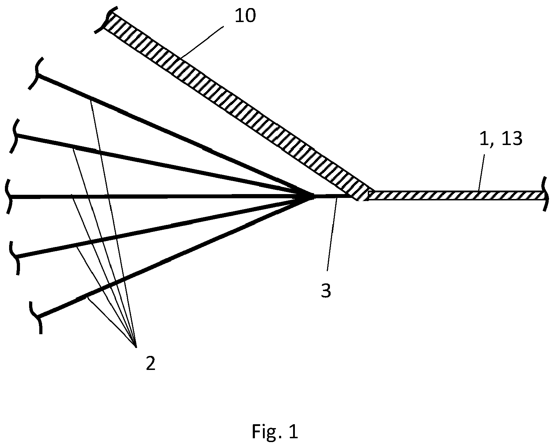

In Figur 1 ist eine schematische Darstellung des erfindungsgemäßen Verfahrens zur Herstellung eines Paspol-Lichtleiters 1.

Zu sehen sind in der Figur 1 als Beispiel fünf einzelne Lichtleiter 2 und ein als Gewebeband ausgestaltetes Gewebe 10. Es können eine beliebige Anzahl an Lichtleitern 2 verwendet werden.

Die fünf Lichtleiter 2 werden nebeneinander angeordnet, so dass sie ein Lichtleiterbündel 3 ausbilden. Seitlich, entlang der Längsseite des Lichtleiterbündels 3, wird das zumindest teilweise lichtdurchlässige Gewebe 10 entlang eines Teilabschnitts des Lichtleiterbündels 3 angeordnet. Das Gewebe 10 wird daraufhin derart um das Lichtleiterbündel 3 herum gelegt, dass er dieses ummantelt und eine die Lichtleiter 2 umschließende Gewebehülle 13 ausbildet. Ein anschließendes festes Verschließen der Gewebehülle 13 bildet folglich den Paspol-Lichtleiter 1 aus.

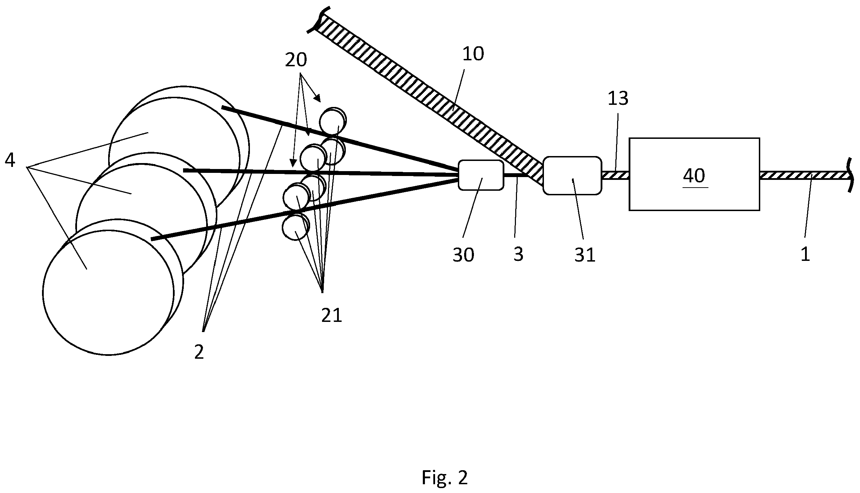

Figur 2 zeigt eine detailliertere Darstellung des erfindungsgemäßen Verfahrens zur Herstellung eines Paspol-Lichtleiters 1.

Der grundsätzliche Aufbau von Figur 2 entspricht dabei dem von Figur 1, mit dem Unterschied, dass hier lediglich drei Lichtleiter 2 verwendet werden.

Die drei Lichtleiter 2 sind hier als Strangmaterial auf Spulen 4 aufgewickelt und werden von diesen für das Verfahren in definierter Länge abgewickelt. Das als Gewebeband ausgestaltete Gewebe 10 kann ebenfalls von einer Spule abgewickelt zur Verfügung gestellt sein.

Den von den Spulen 4 abgewickelten Lichtleitern 3 ist jeweils eine separate Prägeeinheit 20 zugewiesen, so dass die Lichtleiter 2, nachdem sie durch ihre jeweilige Prägeeinheit 20 verfahren sind, eine zumindest teilweise geprägte Oberfläche aufweisen, aus welcher ein durch die Lichtleiter 2 hindurchführbares Licht ausgekoppelt wird. Eine Prägeeinheit 20 umfasst zwei achsparallel zueinander angeordnete Prägerollen 21. Ein jeweils zu prägender Lichtleiter 2 wird zwischen den radialen Außenseiten der Prägerollen 21 hindurchgeführt, so dass eine raue Oberfläche der Prägerollen 21 unter Druck eine Prägung auf der Oberfläche des Lichtleiters 2 realisiert wird.

Die geprägten Lichtleiter 2 werden folglich in eine gemeinsame Leiterführungseinrichtung 30 geführt, so dass die Lichtleiter 2, nach dem Austritt aus der Leiterführungseinrichtung 30 nah beieinander geführt werden. Das bedeutet, dass nach dem Austritt der Lichtleiter 2 aus der Leiterführungseinrichtung 30 eine räumlich nah benachbarte Anordnung der Lichtleiter 2 erzwungen wird, so dass diese ab dem Austritt aus der Leiterführungseinrichtung 3 das Lichtleiterbündel 3 ausbilden.

Das Lichtleiterbündel 3 und das als Gewebeband ausgestaltete Gewebe 10 werden anschließend in eine Hüllenführungseinrichtung 31 eingeführt. In der Hüllenführungseinrichtung 31 wird realisiert, dass das Lichtleiterbündel 3 mittels dem Gewebe 10 ummantelt wird. Dazu bildet die Hüllenführungseinrichtung 31 eine hier nicht dargestellte Bündel-Führung aus, durch welche das Lichtleiterbündel 3 geführt wird, und eine hier nicht dargestellte Gewebe-Führung aus, durch welche das Gewebe 10 geführt wird. In der Gewebe-Führung wird ein Zusammenlegen bzw. ein Zusammenfalten des durch sie hindurchgeführten Gewebes 10 realisiert und die Bündel-Führung führt das Lichtleiterbündel 3 derart relativ zum Gewebe 10, dass das Zusammenlegen bzw. das Zusammenfalten des Gewebes 10 um das Lichtleiterbündel 3 herum stattfindet, so dass eine Ummantelung des Lichtleiterbündels 3 mittels dem Gewebe 10 realisiert wird.

Aus der Hüllenführungseinrichtung 31 tritt demnach ein Lichtleiterbündel 3 aus, um welches herum eine noch nicht verschlossene Gewebehülle 13 ausgebildet wurde.

Das Lichtleiterbündel 3 mit der noch nicht verschlossenen Gewebehülle 13 wird anschließend in eine Schweißeinheit 40 geführt, in welcher mittels eines Schweißprozesses, z.B. durch Ultraschallschweißen, die Gewebehülle 13 fest verschlossen wird. Damit kann ohne weiteres Zutun, im Sinne vom wieder Öffnen der Gewebehülle 13, keiner der Lichtleiter 2 mehr in Querrichtung aus dem Innenraum der Gewebehülle 13 herausbewegt werden. Damit ist gemäß der Ausführung des erfindungsgemäßen Verfahrens in Figur 2 nach dem Schweißprozesses ein Paspol-Lichtleiter 1 hergestellt.

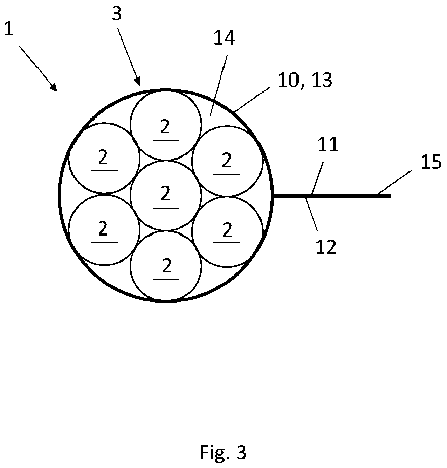

Figur 3 zeigt eine Querschnittsdarstellung eines Erzeugnisses eines erfindungsgemäßen Verfahrens, also den Querschnitt eines erfindungsgemäß hergestellten Paspol-Lichtleiters 1. Der Paspol-Lichtleiter 1 umfasst hier als Beispiel ein aus sieben Lichtleitern 2 ausgebildetes Lichtleiterbündel 3, welches im Innenraum 14 der Gewebehülle 13 angeordnet ist. Alle sieben Lichtleiter 2 haben dabei den gleichen Querschnitt. Der den Innenraum 14 definierende Abschnitt der Gewebehülle 13 und die darin angeordneten sieben Lichtleiter 2 sorgen für eine im Wesentlichen kreisförmige Ausgestaltung. Der Durchmesser eines Lichtleiters 2 entspricht dabei genau einem Drittel des Durchmessers des Innenraums 14 der Gewebehülle 13, so dass eine Querschnittsfläche des Innenraums 14 der Gewebehülle 13 eine Größe A aufweist und eine aufsummierte Querschnittsfläche aller sieben Lichtleiter 2 eine gemeinsame Größe B aufweist, wobei in diesem Beispiel gilt: $B \cdot A = 0{,}777$.

Die sieben Lichtleiter 2 haben damit einen vorteilhaft hohen Anteil an der Querschnittsfläche der Gewebehülle 13, so dass damit das gesamte Bauteil des Paspol-Lichtleiters 1 möglichst geringe Bauraumanforderungen hat und sichergestellt ist, dass die Lichtleiter 2 sich in der Gewebehülle 13 nicht zu viel bewegen können. Dadurch wird eine möglichst optimierte Homogenität in der Lichtabgabe des Paspol-Lichtleiters 1 gewährleistet.

Die Gewebehülle 13 bildet zudem eine radial abstehende Fahne 15 aus. Diese besteht aus einem ersten querseitigen Endbereich 11 der Gewebehülle 13 und einem zweiten querseitigen Endbereich 12 der Gewebehülle 13, welche beim Verfahrensschritt des Ummantelns des Lichtleiterbündels 3 mittels dem Gewebe 10 überstehen.

Das Verschließen der Gewebehülle 13 wird hier im Bereich der Fahne 15 realisiert. Es werden also der erste querseitige Endbereich 11 der Gewebehülle 13 und der zweite querseitige Endbereich 12 der Gewebehülle 13 miteinander verbunden. Das kann z.B. durch Schweißen, Nähen oder Kleben realisiert sein.

Die Fahne 15 ist dazu vorgesehen, dass der Paspol-Lichtleiter 1 mit ihr an Bauteilen wie Innenverkleidungen befestigt wird.

Das erfindungsgemäße Verfahren zur Herstellung eines Paspol-Lichtleiters stellt unter Einsatz konstruktiv möglichst einfacher Mittel einen Paspol-Lichtleiter zur Verfügung, der ein optimales Erscheinungsbild bei breitem Einsatzspektrum und eine effiziente Montage gewährleistet.

BEZUGSZEICHENLISTE

1 Paspol-Lichtleiter
2 Lichtleiter
3 Lichtleiterbündel
4 Spulen

10 Gewebe
11 erster querseitiger Endbereich
12 zweiter querseitiger Endbereich
13 Gewebehülle
14 Innenraum der Gewebehülle
15 Fahne

20 Prägeeinheit
21 Prägerollen

30 Leiterführungseinrichtung
31 Hüllenführungseinrichtung

40 Schweißeinheit

## Patentansprüche

1. Verfahren zur Herstellung eines Paspol-Lichtleiters (1), umfassend folgende Schritte:

    - Anordnen mehrerer Lichtleiter (2) nebeneinander, so dass diese ein Lichtleiterbündel (3) ausbilden;
    - Anordnen eines zumindest teilweise lichtdurchlässigen Gewebes (10) entlang zumindest eines Teilabschnitts des Lichtleiterbündels (3);
    - Ummanteln das Lichtleiterbündels (3) mittels des Gewebes (10), so dass das Gewebe (10) eine Gewebehülle (13) ausbildet, wobei die Gewebehülle (13), im Querschnitt gesehen, eine von dem Lichtleiterbündel (3) abstehende Fahne (15) zur Befestigung des Paspol-Lichtleiters (1) ausbildet;
    - Verschließen der Gewebehülle (13) entlang ihrer Längsseite.

2. Verfahren nach Anspruch 1, **dadurch gekennzeichnet, dass** das nebeneinander Anordnen der Lichtleiter (2) derart realisiert wird, dass die Lichtleiter (2) durch eine gemeinsame Leiterführungseinrichtung (30) geführt werden.

3. Verfahren nach einem der vorhergehenden Ansprüche, **dadurch gekennzeichnet, dass** das Ummanteln des Lichtleiterbündels (2) mittels dem Gewebe (10) durch eine Hüllenführungseinrichtung (31) realisiert wird, indem die Hüllenführungseinrichtung (31) eine Bündel-Führung zur Führung des Lichtleiterbündels (3) und eine Gewebe-Führung zur Führung des Gewebes (10) aufweist, wobei das Gewebe (10) das Lichtleiterbündel (3) nach dem Durchlaufen der Hüllenführungseinrichtung (31) zumindest bereichsweise ummantelt.

4. Verfahren nach einem der vorhergehenden Ansprüche, **dadurch gekennzeichnet, dass** die abstehende Fahne (15) der Gewebehülle (13) im Wesentlichen beide querseitigen Endbereiche (11, 12) des Gewebes (10) umfasst, wobei die Gewebehülle (13) im Bereich der Fahne (15) verschlossen wird.

5. Verfahren nach einem der vorhergehenden Ansprüche, **dadurch gekennzeichnet, dass** in einem weiteren, an das Verschließen der Gewebehülle (13) anschließenden Verfahrensschritt, ein Abtrennen des Paspol-Lichtleiters (1) realisiert wird, so dass ein Paspol-Lichtleiter (1) mit definierter Länge herstellbar ist.

6. Verfahren nach einem der vorhergehenden Ansprüche, **dadurch gekennzeichnet, dass** in einem weiteren Verfahrensschritt ein Abschlusselement zum Verbinden des Paspol-Lichtleiters (1) mit einer Lichtquelle mit einem längsseitigen Ende des Paspol-Lichtleiters (1) verbunden wird.

7. Verfahren nach einem der vorhergehenden Ansprüche, **dadurch gekennzeichnet, dass** in einem weiteren Verfahrensschritt wenigstens einer der Lichtleiter (2) des Paspol-Lichtleiters (1) mittels einer Prägeeinheit (20) vor dem nebeneinander Anordnen der Lichtleiter (2) geprägt wird, zwecks Aufrauung des wenigstens einen Lichtleiters (2) an wenigstens einem Teilbereich der Oberfläche dieses Lichtleiters (2).

8. Verfahren nach einem der vorhergehenden Ansprüche, **dadurch gekennzeichnet, dass** wenigstens zwei Lichtleiter (2) zur Ausbildung des Lichtleiterbündels (3) nebeneinander angeordnet und miteinander verbunden werden.

9. Paspol-Lichtleiter (1) hergestellt nach einem Verfahren gemäß einem der Ansprüche 1 bis 8, umfassend mehrere nebeneinander angeordnete Lichtleiter (2), so dass diese ein Lichtleiterbündel (3) ausbilden, welches von einem zumindest teilweise lichtdurchlässigen Gewebe (10) in Form einer Gewebehülle (13) ummantelt ist, wobei die Gewebehülle (13) entlang ihrer Längsseite fest verschlossen ist.

10. Paspol-Lichtleiter (1) nach Anspruch 9, **dadurch gekennzeichnet, dass** wenigstens einer der Lichtleiter (2) des Lichtleiterbündels (3) einen anderen Querschnitt aufweist, als die anderen Lichtleiter (2) des Lichtleiterbündels (3).

11. Paspol-Lichtleiter (1) nach einem der Ansprüche 9 und 10, **dadurch gekennzeichnet, dass** eine Querschnittsfläche eines Innenraums (14) der Gewebehülle (13) eine Größe A aufweist und eine aufsummierte Querschnittsfläche aller Lichtleiter (2) eine gemeinsame Größe B aufweist, wobei gilt:

$$B \bullet A = 0,5 \dots 1,0$$

Fig. 1

Fig. 2

EP 4 050 253 A1

Fig. 3

Europäisches
Patentamt

European
Patent Office

Office européen
des brevets

# EUROPÄISCHER RECHERCHENBERICHT

**Nummer der Anmeldung**

**EP 22 15 2142**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/296302 A1 (WELCH SR THOMAS A [US] ET AL) 25. November 2010 (2010-11-25) * Absätze [0037], [0039] – [0042]; Abbildungen 6-8 * ----- | 1-11 | INV. F21V8/00 G02B6/04 |
| A | US 2011/103757 A1 (ALKEMPER JOCHEN [DE] ET AL) 5. Mai 2011 (2011-05-05) * Absatz [0017]; Abbildung 15 * ----- | 7,10 | |
| | | | **RECHERCHIERTE SACHGEBIETE (IPC)** G02B B60Q |

Der vorliegende Recherchenbericht wurde für alle Patentansprüche erstellt

| Recherchenort | Abschlußdatum der Recherche | Prüfer |
|---|---|---|
| Den Haag | 7. Juni 2022 | Kapsalis, Alexandros |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 2142

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2022

| Im Recherchenbericht angeführtes Patentdokument | Datum der Veröffentlichung | Mitglied(er) der Patentfamilie | | Datum der Veröffentlichung |
|---|---|---|---|---|
| US 2010296302 A1 | 25-11-2010 | CN | 101910718 A | 08-12-2010 |
| | | DE | 112008002935 T5 | 09-09-2010 |
| | | KR | 20100102104 A | 20-09-2010 |
| | | US | 2010296302 A1 | 25-11-2010 |
| | | WO | 2009058723 A2 | 07-05-2009 |
| US 2011103757 A1 | 05-05-2011 | CN | 101946197 A | 12-01-2011 |
| | | EP | 2243048 A1 | 27-10-2010 |
| | | ES | 2730703 T3 | 12-11-2019 |
| | | JP | 5480822 B2 | 23-04-2014 |
| | | JP | 2011514551 A | 06-05-2011 |
| | | US | 2011103757 A1 | 05-05-2011 |
| | | WO | 2009100834 A1 | 20-08-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 0988179 B1